**Europäisches Patentamt**

**European Patent Office**

**Office européen des brevets**

(19)

(11) Veröffentlichungsnummer: **0 051 867**
A2

(12) ## EUROPÄISCHE PATENTANMELDUNG

(21) Anmeldenummer: 81109544.7

(22) Anmeldetag: 06.11.81

(51) Int. Cl.³: **B 65 G 13/11,** B 65 G 13/07

(30) Priorität: 10.11.80 DE 3042321

(43) Veröffentlichungstag der Anmeldung: 19.05.82
Patentblatt 82/20

(84) Benannte Vertragsstaaten: **DE FR GB IT**

(71) Anmelder: **Gebr. Hasbach GmbH & Co. KG, Paffrather Strasse 132-134, D-5060 Bergisch-Gladbach 2 (DE)**

(72) Erfinder: **Schmülling, Joachim H., Graseggerstrasse 110, D-5000 Köln 60 (DE)**
Erfinder: **Lipka, Heinz, im Bodesfeld 14, D-5000 Köln 90 (DE)**

(74) Vertreter: **Nau, Walter, Dipl.-Ing., Johann-Pullem-Strasse 8, D-5000 Köln 50(Sürth) (DE)**

(54) **Friktionsrollenbahn für den Werkstück- und Vorrichtungstransport.**

(57) Die Friktionsrollenbahn weist eine Vielzahl von Wellen mit Friktionsrollen auf, die in Trägern gelagert sind.

Zur einfachen und variablen Herstellung werden die Träger aus U-förmigen Profilen, die an den Aussenkanten Aussparungen aufweisen, mit diesen Aussparungen und den Schenkeln des benachbarten Profils zusammengepresst. Der Antrieb der Wellen erfolgt über Zahnriemen.

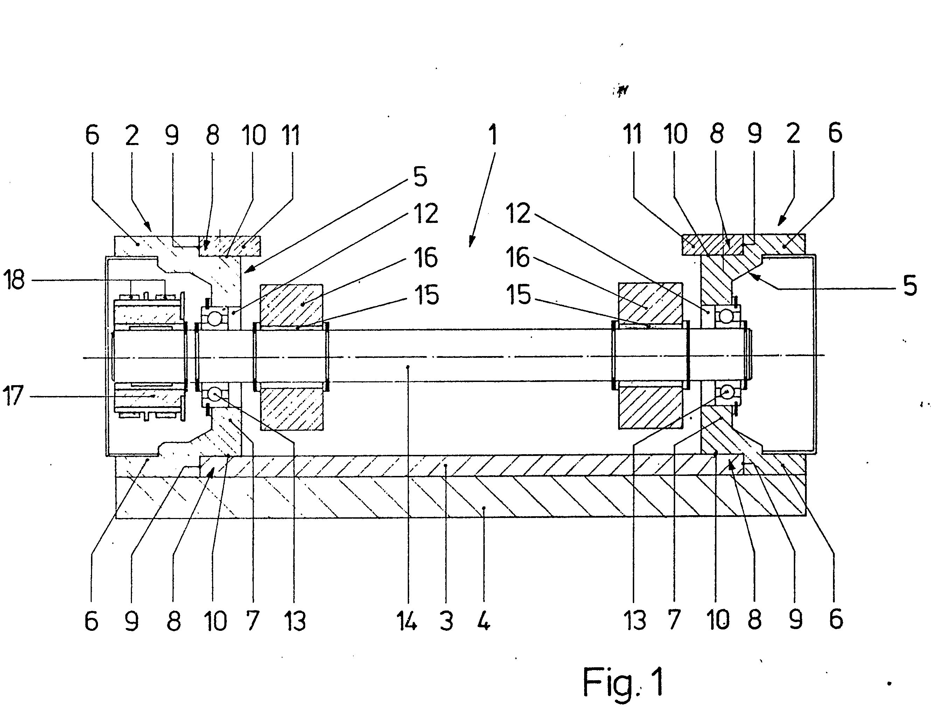

Fig. 1 wird zur Veröffentlichung mit Zusammenfassung vorgeschlagen.

EP 0 051 867 A2

Anmelderin:
Gebr. Hasbach GmbH & Co. KG
Paffrather Str. 132-134
5060 Bergisch-Gladbach 2

03.11.1981

0051867

Friktionsrollenbahn für den Werkstück- und Vorrichtungstransport

Die Erfindung bezieht sich auf eine Friktionsrollenbahn mit einer Vielzahl von in seitlichen Trägern drehbar gelagerten, Friktionsrollen aufnehmenden Wellen, die durch einen sich in Längsrichtung des Trägers erstreckenden Antrieb drehbar sind, wobei die Träger aus stranggepreßten Leichtmetallprofilen bestehen.

Eine solche Friktionsrollenbahn ist durch die DE-PS 25 02 557 bekannt. Der Antrieb jeder Friktionsrollen tragenden Welle erfolgt hier über eine längs des gesamten Trägers verlaufende Antriebswelle und Kegelräderpaare. Dieser Antrieb ist sehr aufwendig und teuer, zumal auch, da dort kein Schmiermittel benutzt wird, die Kegelräderpaare aus Sintermaterial mit eingelagertem Schmiermittel hergestellt werden müssen. Die Träger sind im wesentlichen aus T-förmigen Leichtmetallprofilen hergestellt, die durchaus zu einer stabilen Friktionsrollenbahn zusammengebaut werden können, die aber nicht den jeweiligen Belastungen der Werkstücke angepaßt sind, so daß je nach Werkstücksgröße und -gewicht verschiedene Profile erforderlich sind.

0051867
03.11.1981
7002/80 G EP

Es ist weiterhin eine Rollenbahn zum Transport von Werkstücken mit festen Rollen (keine Friktionsrollen) bekannt (DE-OS 28 05 343), deren Rollen untereinander durch sogenannte Kurzketten von Welle zu Welle miteinander verbunden sind. Das Wesentliche dieser Anmeldung besteht darin, daß die ebenfalls aus Leichtmetall hergestellten Profile Nuten aufweisen, in denen an verschiedenen Stellen Schalterelemente, Hilfsaggregate usw. angebracht werden können.

Diese Profile haben zwar im wesentlichen einen U-förmigen Querschnitt, sie sind jedoch wiederum nur für bestimmte Werkstücke ausgelegt, so daß sie ebenfalls bei anderen Werkstückgrößen und -gewichten über- bzw. unterdimensioniert sind.

Aufgabe der vorliegenden Erfindung ist es, die eingangs geschilderten Nachteile zu vermeiden und einen betriebssicheren, möglichst wartungsfreien und geräuscharmen Betrieb der Friktionsrollenbahn zu gewährleisten. Weiterhin soll durch eine besondere Ausgestaltung der Leichtmetallprofile diese zu verschieden starken Trägern mit einfachen Mitteln beliebig zusammengestellt werden können, so daß ein baukastenartiger Aufbau der Träger und eine einfache Anpassung der Friktionsrollen an verschiedene Formen, Größen und Gewichte von Werkstücken möglich ist. Weiterhin soll gemäß einer Teilaufgabe der Antrieb der Friktionswelle vereinfacht und verbilligt werden, wobei der Antrieb ohne Schmierung und besondere Ausgestaltung der Räder aus

0051867
03.11.1981
7002/80 G EP

kommen soll. Die Aufgabe der Erfindung wird dadurch gelöst, daß die Leichtmetallprofile im wesentlichen als
Rechteckprofile U-förmigen Querschnitts ausgeführt sind
und im Übergangsbereich zwischen den Schenkeln und dem
Steg an der Außenkante je eine längs verlaufende Aussparung aufweisen, deren Begrenzungsflächen parallel zu
den Auflageflächen der Schenkel und des Steges verlaufen,
und daß die Aussparungen zur Aufnahme von Führungsleisten,
Abstandshaltern oder Schenkeln eines weiteren Leichtmetallprofils ausgebildet sind. Dabei ist es vorteilhaft,
wenn das Maß der Schenkelinnenfläche zumindest im äußeren
Bereich dem Abstandsmaß der Aussparungen soweit angepaßt
ist, daß Leichtmetallprofile zu Trägern zusammenpreßbar
sind. Durch diese besondere Ausgestaltung der Leichtmetallprofile lassen sich diese je nach Belastungsfall als
Einzelprofil zu einer Rollenbahn zusammenstellen, wobei
die Aussparung zur Aufnahme von Führungsleisten und Abstandshaltern dienen, so daß mit geringem Aufwand eine
Friktionsrollenbahn erstellt werden kann. Sollen größere
Werkstücke, Montagepalette oder Aggregate transportiert
werden, so werden zwei oder mehr der Leichtmetallprofile
zusammengepreßt, so daß stärkere Träger zur Verfügung
stehen. Um auch gewisse Maßabweichungen auffangen zu
können und trotzdem einen guten Sitz zu gewährleisten,
wird weiterhin erfindungsgemäß vorgeschlagen, daß die
Schenkelinnenflächen oder die dazu parallelen Begrenzungsflächen der Aussparungen Längsrillen aufweisen. Die Erhöhungen zwischen diesen Längsrillen können sich beim Zu-

0051867
03.11.1981
7002/80 G EP

sammenpressen der Profile verformen, so daß keine unzulässige Aufweitung des aufgepreßten Profils stattfindet. Die Leichtmetallprofile können je nach Anforderungen nach dem Verpressen durch Sicherungsstifte aneinandergehalten werden.

Zur Lösung der Teilaufgabe, die sich auf einen einfachen, preisgünstigen und geräuschfreien Antrieb ohne Schmiermittel oder besondere Werkstoffe bezieht, wird vorgeschlagen, daß der Antrieb der Wellen im Hohlraum des U-förmigen Querschnitts angeordnet ist und aus Zahnriemen und Zahnriemenrädern besteht. Ein besonders guter Antrieb wird dadurch erreicht, daß Kurzzahnriemen verwendet werden, wobei pro Welle ein Doppelzahnriemenrad und von Welle zu Welle je ein Zahnriemen vorgesehen sind. In vorteilhafter Weise werden die Doppelzahnriemenräder aus einem Kunststoff, z. B. Duroplast oder Thermoplast, mit einem Mittelsteg zur Führung der Zahnriemen hergestellt. Dabei ist pro Doppelzahnriemen nur ein weiterer äußerer Führungsring erforderlich, wenn die Doppelzahnriemenräder so montiert werden, daß der äußere Führungsring abwechselnd einmal innen und einmal außen angeordnet ist. Die Innenausnehmung der Metallnabe dient zur Aufnahme eines Toleranzringes. Dieser besteht vorzugsweise aus einem gewellten Metallband, das unter Spannung eingesetzt ist und die axiale Sicherung der Zahnriemenräder und die Drehmomentübertragung zur Welle sicherstellt.

Die Leichtmetallprofile können aber auch zur Bildung eines kastenförmigen Trägers, der sowohl als Einzelträger wie auch als seitlicher Träger einer Rollenbahn verwendet

0051867
03.11.1981
7002/80 G EP

werden kann, mit den freien Enden der Schenkel aneinander befestigt werden, wobei in die Aussparungen der Leichtmetallprofile weitere Profile einsetzbar sind und der Kasten der inneren Profile dem Antrieb dient. Eine besonders einfache und preisgünstige Anordnung der bevorzugt verwendeten Kugellager wird dadurch erreicht, daß die Kugellager in Bohrungen der Leichtmetallprofile eingesetzt sind und die Axialsicherung der Welle einerseits durch Federringe in Nuten der Lageraußenringe in Verbindung mit dem Leichtmetallprofil und andererseits durch Federringe in Nuten der Wellen in Verbindung mit den Lagerinnenringen erfolgt. Kugellager mit Ringen in den Lagerringen werden serienmäßig hergestellt. Sie werden in die entsprechenden Bohrungen eingeschoben, so daß die Federringe als Anschlag dienen. Der weitere Anschlag erfolgt durch die Federringe auf der Welle, die an den Lagerinnenringen anliegen.

Zur weiteren Erläuterung der Erfindung wird auf die Zeichnungen verwiesen, in denen mehrere Ausführungsbeispiele vereinfacht dargestellt sind. Es zeigen:

Fig. 1 einen Querschnitt durch eine leichte Bauart einer Friktionsrollenbahn mit zwei als Träger ausgebildeten Leichtmetallprofilen, zwischen denen durchgehende Friktionswellen gelagert sind, wobei der Antrieb der Friktionswellen im Hohlraum des U-förmigen Querschnitts eines Leichtmetallprofils erfolgt,

Fig. 2 eine schwere Bauart einer Friktionsrollenbahn im Querschnitt mit je zwei Leichtmetallprofilen als seitliche Träger mit kurzen Friktionswellen,

0051867

Fig. 3 einen Querschnitt durch einen einzeln, aber auch paarweise benutzbaren Träger mit zwei mit den Schenkels aneinander befestigten Leichtmetallprofilen und zentralem Antrieb,

Fig. 4 einen Teilschnitt durch die linke Schiene gemäß Fig. 2 in vergrößertem Maßstab und

Fig. 5 einen Schnitt durch ein Leichtmetallprofil in vergrößertem Maßstab

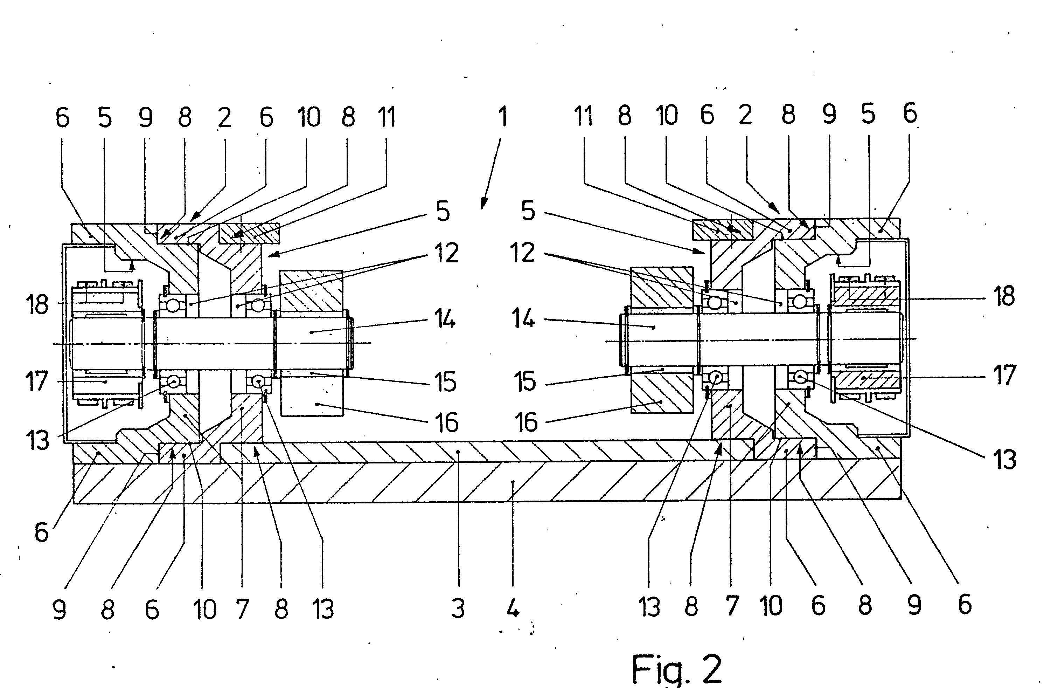

In den Figuren 1 und 2 ist mit 1 eine Friktionsrollenbahn bezeichnet, die seitliche Träger 2 aufweist. Die Träger 2 sind über Abstandshalter 3 aneinander befestigt und mitsamt den Abstandshaltern 3 auf Querstreben 4 gelagert. Die Träger 2 weisen je ein oder mehrere Leichtmetallprofile 5 auf, die U-förmig ausgeführt sind und zwei Schenkel 6 sowie einen Steg 7 aufweisen. Im Übergangsbereich zwischen Schenkeln und Steg sind Aussparungen 8 vorgesehen, deren Begrenzungsflächen 9 und 10 parallel zu den Außenflächen der Schenkel und des Steges verlaufen. In den Aussparungen 8 greifen die Abstandshalter 3 in die Aussparungen 8 ein. Bei den Trägern 2 nach Fig. 2 greifen in die Aussparungen 8 der äußeren Leichtmetallprofile 5 die Schenkel 6 der inneren ein.

In Bohrungen 12 der Leichtmetallprofile 5 sind über Kugellager 13 Wellen 14 gelagert, auf denen über Büchsen 15 Friktionsrollen 16 drehbar gelagert sind. Die Axialsicherung der Wellen erfolgt über Federringe in Nuten der Lageraußenringe und in Nuten der Welle. Jede Welle weist je ein Doppelzahnriemenrad 17 auf, auf dem zwei Zahnriemen

0051867
05.11.1981
7002/80 G EP

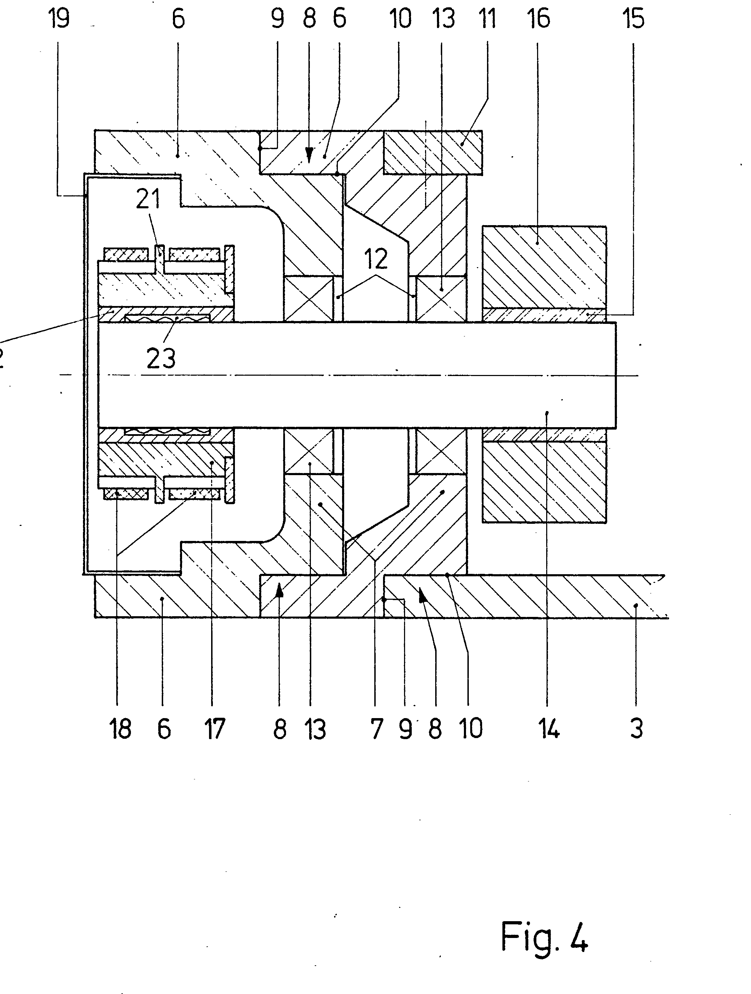

18 angeordnet sind, die zu den benachbarten Wellen führen. Wie insbesondere Fig. 4, einem vergrößerten Schnitt durch die linke Schiene von Fig. 2, zu entnehmen ist, entspricht das Maß der Schenkelinnenflächen dem Abstandsmaß der Aussparungen, so daß zwei Leichtmetallprofile miteinander verpreßt werden können. Aus Sicherheitsgründen sind nicht dargestellte Sicherungsstifte zusätzlich vorgesehen. Die Schenkelinnenflächen im Bereich des Antriebs, die nicht mit Aussparungen weiterer Leichtmetallprofile korrespondieren, sind zur Aufnahme einer Verkleidung 19 geeignet. Wie weiter Fig. 4 zu entnehmen ist, weist das Doppelzahnriemenrad 17 einen äußeren, mittleren Führungssteg 21 sowie einen seitlichen Führungsring auf. Die aus Metall hergestellte Nabe 22 hat eine Innenausnehmung, in der ein Toleranzring 23 eingespannt ist. Zur Verdeutlichung sind die Wellen im Gegensatz zur Wirklichkeit um 90° verdreht eingezeichnet.

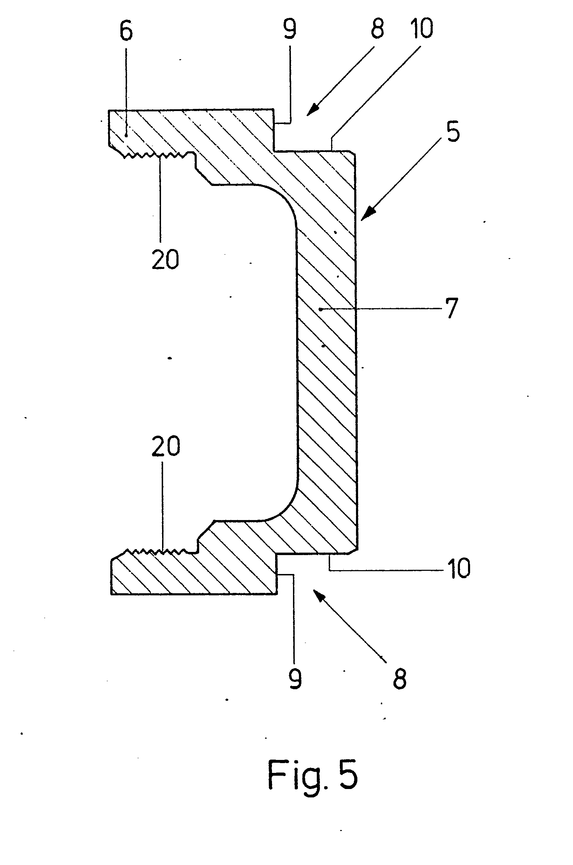

In Fig. 5 sind mit 20 bezeichnete Rillen erkennbar, die in Verbindung mit Erhöhungen eine größere Maßtoleranz erlauben.

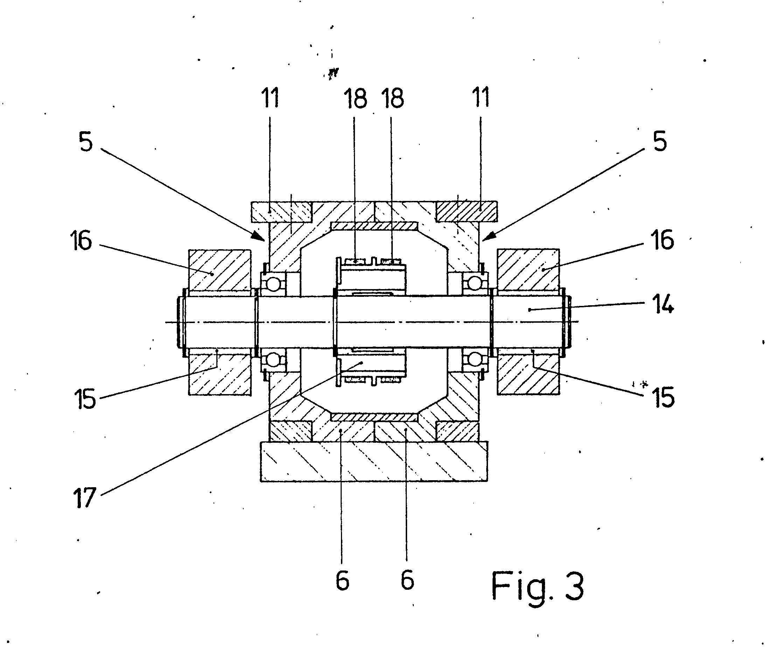

Wie weiterhin Fig. 3 zu entnehmen ist, können zwei Leichtmetallprofile 5 auch mit ihren Schenkeln 6 gegeneinanderstoßend befestigt sein, so daß dadurch ein Träger einer mehrschienigen Friktionsrollenbahn gebildet werden kann. Andererseits kann aber auch je nach Ausgestaltung des zu transportierenden Werkstücks der so gebildete Träger als eigene Friktionsrollenbahn ausgeführt sein. Der Antrieb ist dabei im Innern der beiden Leichtmetallprofile untergebracht.

Anmelderin:
Gebr. Hasbach GmbH & Co. KG
Paffrather Str. 132-134
5060 Bergisch-Gladbach 2

0051867
03.11.1981
7002/80 G EP

P a t e n t a n s p r ü c h e

1.   Friktionsrollenbahn mit einer Vielzahl von in seitlichen Trägern drehbar gelagerten, Friktionsrollen aufnehmenden Wellen, die durch einen sich in Längsrichtung des Trägers erstreckenden Antrieb drehbar sind, wobei die Träger aus stranggepreßten Leichtmetallprofilen hergestellt sind,
dadurch gekennzeichnet, daß die Leichtmetallprofile (5) im wesentlichen als Rechteckprofil U-förmigen Querschnitts ausgeführt sind und im Übergangsbereich zwischen den Schenkeln (6) und dem Steg (7) an der Außenkante je eine längsverlaufende Aussparung (8) aufweisen, deren Begrenzungsflächen (9, 10) parallel zu den Außenflächen der Schenkel (6) und des Steges (7) verlaufen, und daß die Aussparungen (8) zur Aufnahme von Führungsleisten (11), Abstandshaltern (3) oder Schenkeln (6) eines weiteren Leichtmetallprofils (5) ausgebildet sind.

2.   Friktionsrollenbahn nach Anspruch 1,
dadurch gekennzeichnet, daß das Maß der Schenkelinnenflächen zumindest im äußeren Bereich dem Abstandsmaß der Aussparungen (8) so weit angepaßt ist, daß Leichtmetallprofile (5) zu Trägern (2) zusammenpreßbar sind.

3.   Friktionsrollenbahn nach einem der Ansprüche 1 oder 2, dadurch gekennzeichnet, daß die Schenkelinnenflächen oder die dazu parallelen Begrenzungsflächen (9, 10) der Aussparungen (8) Längsrillen (20) aufweisen.

0051867
03.11.1981
7002/80 G EP

4. Friktionsrollenbahn nach einem der Ansprüche 1 bis 3,
dadurch gekennzeichnet, daß die Leichtmetallprofile (5)
nach dem Verpressen durch Stifte gesichert sind.

5. Friktionsrollenbahn nach einem der Ansprüche 1 bis 4,
dadurch gekennzeichnet, daß der Antrieb der Wellen (14) im
Hohlraum des U-förmigen Querschnitts der Leichtmetallprofile (5) angeordnet ist und aus Zahnriemen (18) und
Zahnriemenrädern (17) besteht.

6. Friktionsrollenbahn nach einem der vorhergehenden Ansprüche,
dadurch gekennzeichnet, daß pro Welle (14) ein Doppelzahnriemenrad (17) und von Welle (14) zu Welle (14) je ein
Zahnriemen (18) vorgesehen ist.

7. Friktionsrollenbahn nach einem der vorhergehenden Ansprüche,
dadurch gekennzeichnet, daß die Doppelzahnriemenräder (17)
aus Kunststoff, vorzugsweise aus Duroplast oder Thermoplast, hergestellt sind, einen äußeren und mittleren
Führungssteg (21) und eine Metallnabe (22) aufweisen, wobei die Metallnabe eine Innenausnehmung aufweist, in der
ein zwischen der Welle (14) und der Innenausnehmung eingespannter Toleranzring (23) angeordnet ist.

8. Friktionsrollenbahn nach einem der vorhergehenden Ansprüche,
dadurch gekennzeichnet, daß zwei Leichtmetallprofile (5)
zur Bildung eines kastenförmigen Trägers (2) mit den
freien Enden der Schenkel (6) aneinander befestigt sind,
wobei in die Aussparungen (8) der Leichtmetallprofile (5)
weitere Profile einsetzbar sind und daß innerhalb des
Kastens des Trägers (2) der Antrieb angeordnet ist.

0051867
03.11.1981
7002/80 G EP

9. Friktionsrollenbahn nach einem der vorhergehenden Ansprüche,
dadurch gekennzeichnet, daß in Bohrungen (12) der Leichtmetallprofile (5) Kugellager (13) eingesetzt sind und daß die Axialsicherung der Wellen (14) einerseits durch Federringe in Nuten der Lageraußenringe in Verbindung mit dem Leichtmetallprofil (5) und andererseits durch Federringe in Nuten der Wellen (14) mit den Lagerinnenringen hergestellt ist.

10. Friktionsrollenbahn nach einem der vorhergehenden Ansprüche,
dadurch gekennzeichnet, daß innerhalb der Schenkel (6) der Leichtmetallprofile (5) Verkleidungen (19) eingesetzt sind.

0051867

1/5

Fig. 1

Gebr. Hasbach, Bergisch - Gladbach

7002/80 G

Fig. 2

7002/80 G

Fig. 3

Gebr. Hasbach, Bergisch-Gladbach

7002/80 G

Fig. 4

0051867

4/5

Gebr. Hasbach, Bergisch-Gladbach    7002/80 G

0051867

Fig. 5

Gebr. Hasbach, Bergisch - Gladbach

7002/80 G